# EUROPEAN PATENT APPLICATION

(11) **EP 2 975 726 A1**
(43) Date of publication of application: **20.01.2016**
(21) Application number: 14177352.3
(22) Date of filing: 17.07.2014
(51) Int. Cl.: H02J 9/06

(54) **UPS cold-start with multiple power sources**

(71) Applicant: ABB Technology AG, 8050 Zürich (CH)
(72) Inventor: Paatero, Esa-Kai, 6648 Minusio (CH)
(74) Representative: ABB Patent Attorneys

(57) **Abstract**

The present invention provides a method for operation of an uninterrupted power supply system (10) to provide power to a load (24) at cold-start condition, comprising the steps of providing a first power source (12, 40) and a second power source (14), whereby the second power source (14) is a stored energy power source and the first and second power source (12, 40, 14) are provided in parallel and adapted for simultaneous operation, providing and powering on a cold start circuit (32), performing power balancing to draw energy from the first power source (12, 40) and the second power source (14), whereby the step of performing power balancing comprises preferentially drawing energy from the first power source (12, 40) to minimize depletion of energy stored in the second power source (14) and to extend availability of the same. The present invention also provides an uninterrupted power supply system (10) adapted to perform the above method.

## Description

### Technical Field

The present invention relates to the field of uninterrupted power supplies (UPS). In particular, the present invention relates to the field of cold-start of UPS systems with multiple power sources.

### Background Art

Uninterrupted power supplies (UPS) systems are for most applications connected between an AC power source and an AC load and take over power supply of different kinds of electric systems in case of failure of a power mains supply, which provides power to the electric system in normal operation. Accordingly, the UPS system comprises a power source, which can provide power to the electric system in case of failure of the power mains supply. The failure of the power mains supply can be a complete shutdown, or merely a partial failure, e.g. when only a power level below the power required for the electric system can be provided.

For turn- on of the UPS, its AC source is assumed to be either available at rated value or during interruptions totally unavailable. In the latter case, it is known to provide the UPS with an additional battery, which is used for starting up the UPS. Such an UPS is known e.g. from US 2012/0313438 A1.

However, there are applications where the capability to turn-on a UPS system from a stored energy source, e.g. a battery, is necessary. This can be the case e.g. in installations where AC source level can be consistently below a level required by the UPS for support of rated load, typically referred to as brown-out.

In addition, there is a set lower power limit for UPS auxiliary functions (e.g. auxiliary power supply voltage threshold) to reliably support functionality required during turn-on from AC. Thus, UPS systems may have an additional 'cold start' function, capability through dedicated controls and hardware to turn on also from the battery when the AC power source is unavailable or not within acceptable power limits.

### Disclosure of Invention

It is an object of the present invention to provide a method for operation of an uninterrupted power supply system () to provide power to a load at cold-start condition and a UPS system to perform the above method, which provides an efficient usage of stored energy, which increases availability of stored energy for operation of the UPS system, and which provides a high grade in flexibility in respect to the usage of the UPS system.

This object is achieved by the independent claims. Advantageous embodiments are given in the dependent claims.

In particular, the present invention provides a method for operation of an uninterrupted power supply system to provide power to a load at cold-start condition, comprising the steps of providing a first power source and a second power source, whereby the second power source is a stored energy power source and the first and second power source are provided in parallel and adapted for simultaneous operation, providing and powering on a cold start circuit, performing power balancing to draw energy from the first power source and the second power source, whereby the step of performing power balancing comprises preferentially drawing energy from the first power source to minimize depletion of energy stored in the second power source and extend availability of the same.

The present invention also provides an uninterrupted power supply system with a cold-start circuit for providing power to a load, comprising a first power source, a second power source, whereby the second power source is a stored energy power source and the first and second power source are provided in parallel and adapted for simultaneous operation, a power output for connection to a load, whereby power from the first and second power source can be coupled to the power output, and a system controller for controlling the provision of power from the first and the second power source to the power output, whereby the uninterrupted power supply system is adapted to perform the above method.

The basic idea of the invention is to perform power balancing with a preference for the first power source after cold-start of the uninterrupted power supply (UPS) system. Accordingly, also in cases of brown-out, where a voltage level of the first power source is consistently below a level required by the UPS system for support of a connected load, an efficient cold-start of the UPS system can be performed. No lower limit for UPS auxiliary functions, e.g. auxiliary power supply voltage threshold, has to be defined and no toggling between the first and second power supply is required. Power balancing can reliably support functionality required during turn-on from both power sources.

Under cold start conditions, the UPS can be started and subsequent energy draw with the first power source at least partially available allows for dynamically balancing simultaneous energy draw from the first and second power source, whereby energy draw from the first power source is maximized. Hence, energy draw from the second power source is minimized. Alternatively, DC source energy draw from alternate energy sources will be maximized as above in case the first power source is not available, i.e. in the case of blackout.

The method enables reduced energy consumption from the stored energy, which increases the operation time of the UPS system in case of failure of the first power supply. This increase can be achieved by e.g. adaption of firmware of the UPS system. Accordingly, UPS systems with increased flexibility to product applications can be provided at low effort and cost.

The cold-start circuit typically powers up system control, i.e. it activates a system controller of the UPS system. It also precharges a DC link between an input side and an output side of power converters connected to the power supplies and output converters connected to the power output of the UPS system, before the second power supply is activated to support the load. Hence, typically a second power converter connected to the second power supply, which is a DC-DC power converter, is turned on to power a load after precharging the DC link.

Cold-start refers to powering of the system controller as well as providing output power to the load at the power output. After cold start, normal operation of the UPS system can start to provide power to the load without using the cold-start functionality, i.e. without using the cold-start circuit.

According to a modified embodiment of the invention the step of providing a first power source comprises providing a first AC power source, and the step of preferentially drawing energy from the first AC power source comprises preferentially drawing energy from the first AC power source based on pre-determined power throughput capability vs. actual AC voltage level of the first AC power source. Hence, for the AC power source, these characteristics enable an efficient power balancing during cold-start. It can be determined whether the firs AC power source is fully available or only partially available. The throughput capability vs. actual AC voltage level can be dynamically evaluated to determine the availability of the first power source e.g. also under load conditions.

According to a modified embodiment of the invention the step of preferentially drawing energy from the first AC power source based on pre-determined power throughput capability vs. actual voltage level comprises preferentially drawing energy from the first power source based on pre-determined power throughput capability vs. actual voltage level based on either a predefined set of fixed values or a predefined curve of voltage vs. load of the first and/or second power source. Hence, characteristics of the first and/or second power supply can be determined in advance and provided in the way of a characteristic curve or individual fixed values, which enable a determination of the power throughput capability and the actual voltage level. E.g. a decrease of the voltage level can be evaluated to determine, how power balancing can be performed to provide sufficient power to the load and to minimize depletion of energy stored in the second power source and extend availability of the same.

According to a modified embodiment of the invention the step of providing a first power source comprises providing the first power source with operation below its nominal turn-on voltage. Hence, power balancing is performed in a way that preferentially energy is drawn from the first power source. Missing energy, i.e. energy not provided from the first power source but required for operation of the load, can be drawn from the second power source. Accordingly, preference for the first power source is maintained.

According to a modified embodiment of the invention the step of providing a first power source comprises providing the first power source with operation at its nominal turn-on voltage or above its nominal turn-on voltage. Hence, when the first power source is sufficiently available to provide power for the load, power balancing can be performed in a way to draw all required energy from the first power source. Accordingly, the second power source can be kept available but without its stored energy being consumed. When the operation of the first power source provides a reduced voltage with a voltage level below its nominal turn-on voltage, power balancing can be performed in a way to additionally draw energy from the second power source. Nevertheless, preference for energy from the first power source is maintained by draw available energy from the first power source.

According to a modified embodiment of the invention the method comprises the additional steps of monitoring the operation of the first power source, and transferring energy draw from combined operation of the first and second power source to operation of the first power source alone upon detection of a voltage level of the first power source at or over its nominal turn-on voltage range. Hence, the method enables dynamically adapting the energy draw from the first and second power source also after power-on of the UPS system, i.e. at cold start, so that energy draw from the second power source can be reduced to a minimum. When the availability of the first power source increases, energy draw at cold start is adapted to draw available energy from the first power source and to draw only additionally required energy to enable operation of the load from the second power source.

According to a modified embodiment of the invention the method comprises the additional step of setting a maximum energy draw form the first and/or second power source based on source characteristics. These characteristics may comprise a source voltage, including actual and nominal, a provided power source fusing or other kind of power source protection, a power source available energy storage, a capacity of the energy storage, e.g. in 'Ah', a power source capability for extended operation, e.g. in the case of the use of a fuel cell, or photovoltaic capacity, or point of operation.

According to a modified embodiment of the invention the step of preferentially drawing energy from the first power source comprises limiting a dynamical behavior of energy draw from the first and/or second power source for load power change vs. time to support weak sources. Hence, source characteristics like source impedance or the use of a transformer or a generator as power source can be considered. In the case of DC power sources, a dynamic capability of source load change can be considered, which is typically different for e.g. a fuel cell or a photovoltaic cell.

According to a modified embodiment of the invention the step of providing a first power source and a second power source comprising providing a first and a second power converter, which are connected on a supply side to the first and second power supply, respectively, and which are coupled on an output side to a common power bus. Hence, even very different kinds of power sources providing e.g. very different voltage levels can be commonly used to provide power to the load. Preferably, an output power converter is provided between the power bus and the power output to provided the output power to the load at a desired voltage level. Depending on the chosen power converter, the provided voltage at the power output can be an AC or a DC voltage.

According to a modified embodiment of the invention the method comprises the additional step of monitoring an imminent over-temperature of the first and second power converter, and the step of preferentially drawing energy from the first power source comprises using the imminent over-temperature as criterion to proportionally balance energy draw between the first and the second power source. Hence, the operation of the UPS system can be improved in respect to failure of the UPS system.

According to a modified embodiment of the invention the step of providing a first power source comprises providing multiple first power sources in parallel, whereby the step of operating the first and second power source simultaneously comprises operating the multiple first power sources and the second power source simultaneously, the step of performing power balancing to draw energy from the first power source and the second power source comprises performing power balancing to draw energy from the multiple first power sources and the second power source, and the step of preferentially drawing energy from the first power source comprises preferentially drawing energy from the multiple first power sources. Hence, the first power source may comprise multiple individual power sources with individual characteristics, which can be considered individually when drawing power from the first power source as a whole. Preferably, the step of preferentially drawing energy from the multiple first power sources comprises drawing energy from one of the first power sources alone or performing a combined energy draw from the first power sources. Power balancing between the first power sources can be applied.

According to a modified embodiment of the invention the step of providing a first power source comprises providing a first DC power source, and the step of preferentially drawing energy from the first power source comprises preferentially drawing energy from the first DC power source based on pre-determined DC power source characteristics. The first DC power source can be any kind of DC power source including a stored energy power source, e.g. a battery. More suitably, the first DC power source is a power source based on photovoltaic cells or a fuel cell, which typically provide DC power. Hence, the DC power source can have a varying availability, e.g. in respect to available power in respect to nominal power.

According to a modified embodiment of the invention the step of providing power to a load comprises providing AC power and/or DC power to the load. Hence, the load can be an AC or DC load, or a load requiring a combination of AC and DC power. In this context, it is to be noted that the load does not have to be a single load, but may comprises multiple individual loads, which are commonly considered as load for the UPS system. Accordingly, the UPS system may comprise two power outputs, one for AC output power and one for DC output power. The power output can be powered commonly by the power sources, e.g. when at least one of the power sources provides power to an internal power bus, and the power outputs receive power from the power bus. Accordingly, at least one of the power outputs is connected via an output power converter to the internal power bus. Preferably, both power outputs are connected via output power converters to the power bus to provide a desired output voltage independent from voltage levels from the power sources.

According to a modified embodiment of the invention the step of providing power to a load comprises providing power at different voltage levels to the load. Hence, the load can comprises a combination of loads at different voltage levels. In this context, it is to be noted that the load does not have to be a single load, but may comprises multiple individual loads, which are commonly considered as load in respect to the UPS system. Accordingly, the UPS system may comprise two or more power outputs for providing output power at the different voltage levels. The power outputs can be powered commonly by the power sources, e.g. when at least one of the power sources provides power to an internal power bus, and the power outputs receive power from the power bus. Accordingly, at least one of the power outputs is connected via an output power converter to the internal power bus. Preferably, both power outputs are connected via output power converters to the power bus to provide a desired output voltage independent from voltage levels from the power sources.

According to a modified embodiment of the invention the step of powering on the cold start circuit comprises powering on the cold start circuit from the second energy source. The second power source is the stored energy power source. Hence, the second power source is supposed to have a high availability, which is typically higher than the availability of the first power source. This provides a high reliability in performing a cold start using the UPS system.

### Brief Description of Drawings

These and other aspects of the invention will be apparent from and elucidated with reference to the embodiments described hereinafter.

In the drawings:
- Fig. 1: shows an uninterrupted power supply system according to a first embodiment as a schematic drawing,
- Fig. 2: shows the uninterrupted power supply system according to Fig. 1 with powering of the cold-start circuit at power on,
- Fig. 3: shows the uninterrupted power supply system according to Fig. 1 with applied power balancing, and
- Fig. 4: shows an uninterrupted power supply system according to a second embodiment as a schematic drawing with applied power balancing.

### Detailed Description of the Invention

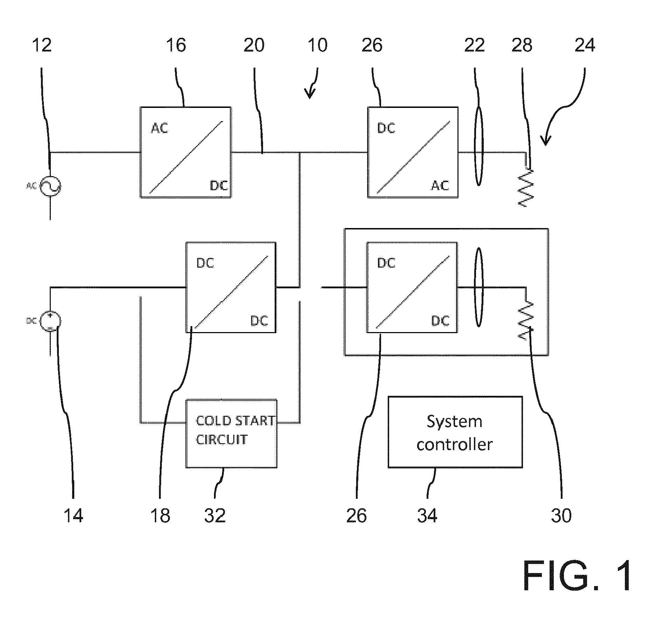

Fig. 1 shows an uninterrupted power supply (UPS) system 10 according to a first, preferred embodiment of the invention. The UPS system 10 comprises a first AC power source 12 and a second power source 14, which are connected via a first and second power converter 16, 18, respectively, in parallel to a common power bus 20. The second power source 14 is a battery in this embodiment as stored energy power source. Hence, the power converters 16, 18 are connected in on their supply side to the first and second power source 12, 40 and on their output side in parallel to the power bus 20 for simultaneous operation. The first power converter 16 is in accordance with the first AC power source 12 an AC/DC converter and the second power converter 18 is in accordance with the second power source 14 a DC/DC converter. The power bus 20 is provided as DC bus, also referred to as DC link.

As can be further seen in Fig. 1, the UPS system 10 comprises a power output 22 and for connection to a load 24. The load 24 is connected via an output power converter 26 to the power bus 20, so that power from the first and second power source 12, 14 can be coupled via the power bus 20 and the output converter 26 to the power output 22. The load 24 in this embodiment comprises an AC load 28. In an alternative embodiment also indicated in Fig. 1, the load 24 comprises in addition to the AC load 28 a DC load 30. The AC load 28 and the DC load 30 are connected both via output power converters 26 to the power bus 20. Depending on the type of load 24, one of the output converters 26 is provided as DC/DC converter, and the other output converter 26 is provided as DC/AC converter.

The UPS system 10 according to the first embodiment comprises a cold-start circuit 32 for providing power to the load 24 and for powering up system control, i.e. it activates a system controller 34 of the UPS system 10. The cold-start circuit 32 also precharges the DC link 20. Cold-start refers to powering of the system controller 34 as well as providing output power to the load 24 at the power output 22. After cold start, normal operation of the UPS system 10 can start to provide power to the load 24 without using the cold-start functionality, i.e. without using the cold-start circuit 32.

The system controller 34 is adapted for controlling the provision of power from the first and the second power source 12, 14 to the power bus 20 and from the power bus 20 to the power output 22. Hence, the system controller 34 controls the first and second power converter 16, 18 as well as the output power converter 26 as described below in detail.

After power-on, the system controller 34 is powered-on, which then activates the first and second input power converters 16, 18 and the output power converter 26 to provide power to the load 24.

The system controller 34 is adapted to perform control of the first and second power converters 16, 18 to perform power balancing between the first and the second power source 12, 14 in a way that preferentially energy is drawn from the first AC power source 12. Missing energy, i.e. energy not provided from the first AC power source 12 but required for operation of the load 24, is drawn from the second power source 14.

Furthermore, the step of preferentially drawing energy from the first power source 12 comprises limiting a dynamical behavior of energy draw from the first and/or second power source 12, 14 for load power change vs. time to support weak power sources. Hence, source characteristics like source impedance or the use of a transformer or a generator as power source can be considered. For DC power sources, a dynamic capability of source load change is considered, which is typically different for e.g. a fuel cell or a photovoltaic cell.

Additionally, a maximum energy draw form the first and/or second power source 12, 14 is set by a user based on source characteristics of the first and/or the second power source 12, 14. These characteristics comprise a source voltage, including actual and nominal voltage, a provided power source fusing or other kind of power source protection, a power source available energy storage, a capacity of the energy storage, e.g. in 'Ah', a power source capability for extended operation, e.g. in the case of the use of a fuel cell, or photovoltaic capacity, or point of operation.

Control of the system controller 34 comprises the additional step of monitoring an imminent over-temperature of the first and second power converter 16, 18. Accordingly, the step of preferentially drawing energy from the first power source 12 comprises using the imminent over-temperature as criterion to proportionally balance energy draw between the first and the second power source 12, 14.

In this embodiment, the step of drawing energy from the first AC power source 12 is based on pre-determined power throughput capability vs. actual AC voltage level of the first AC power source 12, which is dynamically evaluated. This is based on either a predefined set of fixed values or a predefined curve of voltage vs. load 24 of the first and/or second power source 12, 14.

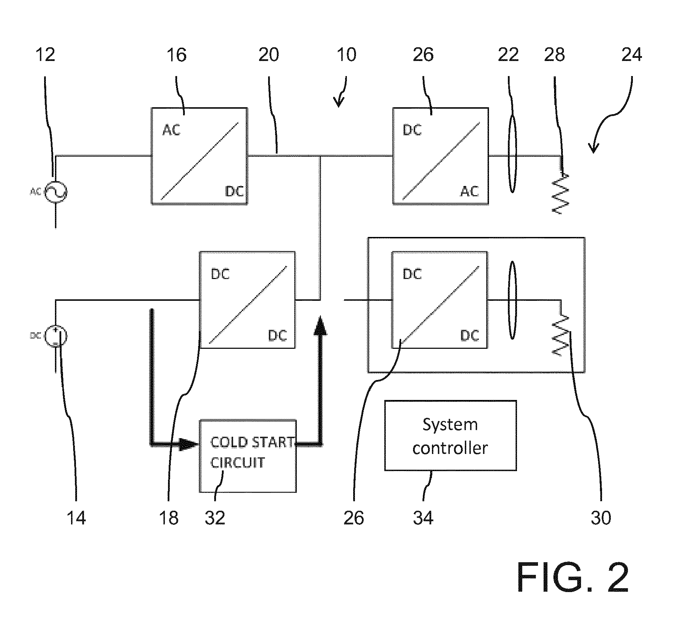

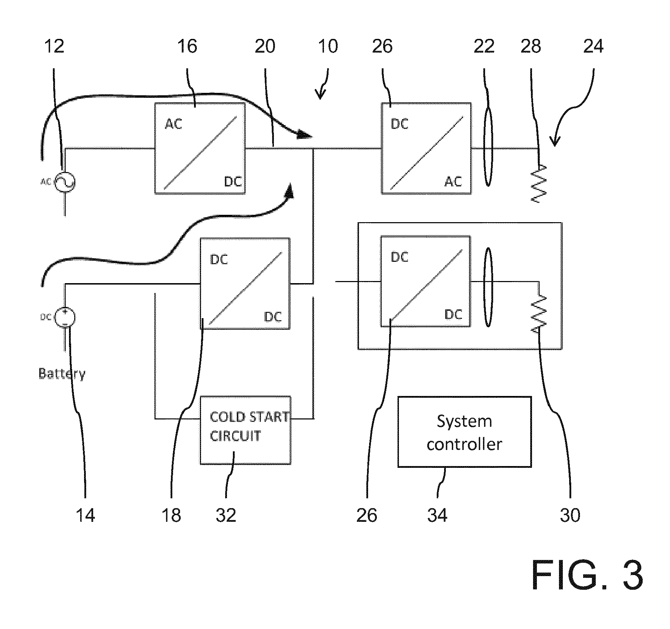

In a first operational example, the first AC power source 12 is operated below its nominal turn-on voltage at cold-start. At power-on, the cold start circuit 32 is powered from the second energy source 14, as indicated in Fig. 2 by the bold arrow. Subsequent energy draw is performed from the first and second power source 12, 14, as indicated in Fig. 3 by the bold arrows, whereby simultaneous energy draw from the first and second power source 12, 14 is dynamically balanced so that energy draw from the first power source 12 is maximized.

Subsequently, the operation of the first power source 12 is monitored. Upon detection of a voltage level of the first power source 12 at or over its nominal turn-on voltage range, energy draw from combined operation of the first and second power source 12, 14 is transferred to operation of the first power source 12 alone. With increasing availability of the first power source 12, energy draw is adapted to draw available energy from the first power source 12 and to draw only additionally required energy to enable operation of the load 24 from the second power source 14.

In a second example, the first AC power source 12 is operated with operation at its nominal turn-on voltage or above its nominal turn-on voltage. Since the system controller 34 is adapted to perform control of the first and second power converters 16, 18 to perform power balancing between the first and the second power source 12, 14 in a way that preferentially energy is drawn from the first AC power source 12, the system controller 34 performs a control to draw energy only from the first AC power source 12 right from the beginning.

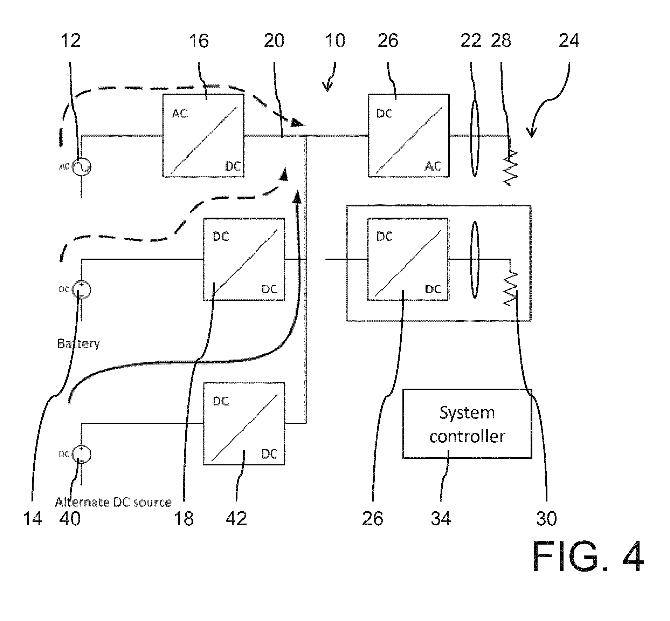

A second, modified embodiment is shown in Fig. 4. The UPS system 10 according to the second embodiment comprises all components as described above of the UPS system 10 of the first embodiment. It is to be noted that the cold-start circuit 32 of the first embodiment is also present in the UPS system 10 according to the second embodiment, although not depicted in Fig. 4.

Additionally the UPS system 10 according to the second embodiment comprises an alternate DC power source 40 as first DC power source, which is connected to the DC link 20 in accordance with the first AC power source 12 and the second power source 14 via alternate DC/DC converter 42.

According to the second embodiment, in addition to operating the first and second power source 12, 40, 14 simultaneously and performing power balancing to draw energy preferentially from the first power source 12, 40, power balancing is performed in respect to the first power sources 12, 40 and preferentially drawing energy from the two first power sources 12, 40. The first DC power source 40 in this embodiment is a photovoltaic cell, which is preferably operated. Hence, preferentially drawing energy from the two first power sources 12, 40 comprises drawing energy preferentially from the first DC power source. The system controller additionally applies power balancing between the first AC power source 12 and the first DC power source 40 depending on the availability of the first DC power source. Hence, preferentially drawing energy from the first power source 12, 40 is based on pre-determined DC power source characteristics.

While the invention has been illustrated and described in detail in the drawings and foregoing description, such illustration and description are to be considered illustrative or exemplary and not restrictive; the invention is not limited to the disclosed embodiments. Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 10: uninterrupted power supply (UPS) system
- 12: first power source, first AC power source
- 14: second power source, battery
- 16: first power converter
- 18: second power converter
- 20: power bus, DC link
- 22: power output
- 24: load
- 26: output power converter
- 28: AC load
- 30: DC load
- 32: cold-start circuit
- 34: system controller
- 40: first power source, first DC power source
- 42: first power converter, alternate DC/DC power converter

## Claims

1. Method for operation of an uninterrupted power supply system (10) to provide power to a load (24) at cold-start condition,
comprising the steps of
providing a first power source (12, 40) and a second power source (14), whereby the second power source (14) is a stored energy power source and the first and second power source (12, 40, 14) are provided in parallel and adapted for simultaneous operation,
providing and powering on a cold start circuit (32),
performing power balancing to draw energy from the first power source (12, 40) and the second power source (14), whereby
the step of performing power balancing comprises preferentially drawing energy from the first power source (12, 40) to minimize depletion of energy stored in the second power source (14) and to extend availability of the same.

2. Method for operation of an uninterrupted power supply system () according to claim 1,
**characterized in that**
the step of providing a first power source (12, 40) comprises providing a first AC power source (12), and
the step of preferentially drawing energy from the first power source (12, 40) comprises preferentially drawing energy from the first AC power source (12) based on pre-determined power throughput capability vs. actual AC voltage level of the first AC power source (12).

3. Method for operation of an uninterrupted power supply system (10) according to preceding claim 2,
**characterized in that**
the step of preferentially drawing energy from the first AC power source (12) based on pre-determined power throughput capability vs. actual voltage level comprises
preferentially drawing energy from the first AC power source based on pre-determined power throughput capability vs. actual voltage level based on either a predefined set of fixed values or a predefined curve of voltage vs. load of the first and/or second power source (12, 40, 14).

4. Method for operation of an uninterrupted power supply system (10) according to claim 1 to 3,
**characterized in that**
the step of providing a first power source (12, 40) comprises providing the first power source (12, 40) with operation below its nominal turn-on voltage.

5. Method for operation of an uninterrupted power supply system (10) according to any of claims 1 to 3,
**characterized in that**
the step of providing a first power source (12, 40) comprises providing the first power source (12, 40) with its nominal turn-on voltage or above its nominal turn-on voltage.

6. Method for operation of an uninterrupted power supply system (10) according to any of claims 1 to 5,
**characterized in that**
the method comprises the additional steps of monitoring the operation of the first power source (12, 40), and
transferring energy draw from combined operation of the first and second power source (12, 40, 14) to operation of the first power source (12, 40) alone upon detection of a voltage level of the first power source (12, 40) at or over its nominal turn-on voltage range.

7. Method for operation of an uninterrupted power supply system (10) according to any of preceding claims 1 to 6,
**characterized in that**
the method comprises the additional step of setting a maximum energy draw form the first and/or second power source (12, 40, 14) based on source characteristics.

8. Method for operation of an uninterrupted power supply system (10) according to any of preceding claims 1 to 7,
**characterized in that**
the step of preferentially drawing energy from the first power source (12, 40) comprises limiting a dynamical behavior of energy draw from the first and/or second power source (12, 40, 14) for load power change vs. time to support weak sources.

9. Method for operation of an uninterrupted power supply system (10) according to any of preceding claims 1 to 8,
**characterized in that**
the step of providing a first power source (12, 40) and a second power source (14) comprising providing a first and a second power converter (16, 42, 18), which are connected on a supply side to the first and second power source (12, 40, 14), respectively, and which are coupled on an output side to a common power bus (20).

10. Method for operation of an uninterrupted power supply system (10) according to preceding claim 9,
**characterized in that**
the method comprises the additional step of monitoring an imminent over-temperature of the first and second power converter (16, 18), and
the step of preferentially drawing energy from the first power source (12, 40) comprises using the imminent over-temperature as criterion to proportionally balance energy draw between the first and the second power source (12, 40, 14).

11. Method for operation of an uninterrupted power supply system (10) according to any of preceding claims 1 to 9,
**characterized in that**
the step of providing a first power source (12, 40) comprises providing multiple first power sources (12, 40) in parallel,
whereby
the step of operating the first and second power source (12, 40, 14) simultaneously comprises operating the multiple first power sources (12, 40) and the second power source (14) simultaneously,
the step of performing power balancing to draw energy from the first power source (12, 40) and the second power source (14) comprises performing power balancing to draw energy from the multiple first power sources (12, 40) and the second power source (14), and
the step of preferentially drawing energy from the first power source (12, 40) comprises preferentially drawing energy from the multiple first power sources (12,40).

12. Method for operation of an uninterrupted power supply system (10) according to any of preceding claims 1 to 10,
**characterized in that**
the step of providing a first power source (12, 40) comprises providing a first DC power source (40), and
the step of preferentially drawing energy from the first power source (12, 40) comprises preferentially drawing energy from the first DC power source (40) based on pre-determined DC power source characteristics.

13. Method for operation of an uninterrupted power supply system (10) according to any of preceding claims 1 to 11,
**characterized in that**
the step of providing power to a load (24) comprises providing AC power and/or DC power to the load (24).

14. Method for operation of an uninterrupted power supply system (10) according to claim 1,
**characterized in that**
the step of powering on the cold start circuit (32) comprises powering on the cold start circuit (32) from the second energy source (14).

15. Uninterrupted power supply system (10) with a cold-start circuit (32) for providing power to a load (24), comprising
a first power source (12, 40),
a second power source (14), whereby the second power source (14) is a stored energy power source and the first and second power source (12, 40, 14) are provided in parallel and adapted for simultaneous operation,
a power output (22) for connection to a load (24), whereby power from the first and second power source (12, 40, 14) can be coupled to the power output (22), and
a system controller (34) for controlling the provision of power from the first and the second power source (12, 40, 14) to the power output (22),
whereby
the uninterrupted power supply system (10) is adapted to perform the method according to one of the above method claims.
